# EUROPEAN PATENT APPLICATION

(11) **EP 3 441 288 A1**
(43) Date of publication of application: **13.02.2019**
(21) Application number: 18186608.8
(22) Date of filing: 31.07.2018
(51) Int. Cl.: B62D 13/04, B62D 7/14, B62D 13/02

(54) **TRAILER**

(30) Priority: 07.08.2017 NL 2019399
(71) Applicant: Broshuis B.V., 8263 AD Kampen (NL)
(72) Inventor: Vorsteveld, Harm Frederik, 8263 AD Kampen (NL)
(74) Representative: V.O.

(57) **Abstract**

There is provided a trailer, comprising a chassis and an undercarriage, which comprises one or more wheel lines. Each wheel line comprises at least two wheel sets placed on either side of the trailer and steerable about an upright axis, and at the position of the undercarriage the chassis comprises a central recess running in longitudinal direction and open at the top. The recess extends both in longitudinal and in height direction at least partially between the mutually opposite wheel sets of one or more of the wheel lines. The chassis comprises a lowered middle part for bearing a load, as well as an end part raised relative thereto, from which the undercarriage is suspended, and in which the recess is situated. The steerable wheel sets on either side of the trailer are hydraulically connected with each other while leaving the recess clear, and the recess is clear to a level that is located lower than the load-bearing middle chassis part.

## Description

The invention relates to a trailer, in particular to a so-called low-loader.

Trailers usually comprise a chassis and an undercarriage, which comprises one or more wheel lines, each wheel line comprising at least two sets of wheels placed on either side of the trailer. A trailer implemented as a low-loader comprises a front part which can be coupled to a tractive vehicle, a relatively low-lying loading floor connecting thereto and a rear chassis part which is raised once again relative to the loading floor, and to which is attached the undercarriage consisting of one or more wheel lines.

The front part can take the form of a swan-neck, which can be placed onto a kingpin of the tractor unit. The swan-neck may be detachably connected to the middle part, and optionally, between the swan-neck and the middle part, a chassis part may be provided that is likewise provided with a number of wheel lines.

Low-loaders are often used to transport heavy equipment, for example bulldozers, excavators, cranes and the like. Particularly in the transport of excavators, it is an advantage when the rear chassis part comprises a central recess open at the top - also called boom slot - in which the excavator arm or boom of the excavator can come to rest. In this manner, the total height of the load on the trailer is reduced, which is important when passing viaducts, overhead wires and the like, without the length of the trailer having to increase much.

From NL 1025755, a low- loader is known, having on either side of a central recess sets of wheels placed in the chassis which are steerable about a vertical axis, while the bottom of the chassis recess between the wheel sets is situated substantially at the same level as the load-bearing chassis part, and wherein there is provided a steering connecting rod between a set of wheel sets situated on either side of the recess, which traverses the recess near the bottom. The steering connecting rod serves to couple the steering movement of the wheel sets on either side, so that if the steering of the wheels sets were to fail on one side of the recess, the wheel sets on either side still move along with each other. The steering connecting rod connects the wheel legs of the wheel sets, and is situated above the horizontal pivot of the support arm. With this, the position of the steering connecting rod is defined at a relatively high minimum height. As a result, the steering connecting rod traverses the recess, or provides that the height of the upper side of the chassis tubular beam - which forms the bottom of the recess - comes to lie higher than the steering connecting rod. In this manner, the effective depth of the recess is limited in practice, and also the steering connecting rod may get damaged.

The invention envisages a trailer with which the above-mentioned disadvantages are avoided. To that end, the invention provides a trailer, comprising a chassis and an undercarriage, which comprises one or more wheel lines, wherein each wheel line comprises at least two sets of wheels placed on either side of the trailer, steerable about an upright axis, and wherein at the position of the undercarriage the chassis comprises a central recess running in longitudinal direction and open at the top, which extends both in longitudinal and in height direction at least partially between the mutually opposite wheel sets of one or more of the wheel lines, wherein the chassis comprises a lowered middle part for bearing a load, as well as an end part raised relative thereto, from which the undercarriage is suspended and in which the recess is situated, characterized in that the steerable wheel sets on either side of the trailer are hydraulically connected with each other while leaving the recess clear, and that the recess is clear to a level that is located lower than the lowered middle part for bearing the load.

By providing a hydraulic coupling between the steerable wheel sets on either side of the trailer, the steering connecting rod can be omitted, and the boom slot can remain clear up to the bottom. By the absence of a steering rod sitting in the way, the top of the tubular chassis beam which forms the bottom of the recess can be placed at the lowest position that is necessary for reasons of desired ground clearance and strength. As a consequence, in the design, it can be chosen to be lower than the load-bearing chassis part, and the recess can be clear to a level that in a running order condition is located lower than the load-bearing middle chassis part. The bottom of the recess is then, at least at the transition between the end part and the middle part of the chassis, situated lower than the top of the middle part of the chassis, for example in a stepped transition. The recess is then preferably clear throughout the length and height direction thereof, i.e., in height direction from the open top down to the bottom, and in longitudinal direction throughout the length of the recess.

By mechanically coupling the steerable wheel sets on either side of the trailer each with a hydraulic coupling cylinder, and by connecting the hydraulic coupling cylinders hydraulically with each other via lines, the hydraulic coupling can be elegantly implemented.

Further advantageous embodiments of the invention are represented in the dependent claims. The invention will be further elucidated on the basis of an exemplary embodiment which is represented in a drawing.

In the drawing:
Fig. 1 shows a schematic perspective side view of the trailer according to the invention,
Fig. 2 shows a schematic cross section of the trailer of Fig. 1 between the sets of wheels,
Fig. 3 shows a schematic longitudinal section of the trailer of Fig. 1 along the recess, and
Fig. 4 shows a schematic view of the steering system of the trailer of Fig. 1.

It is noted that the figures are only schematic views of a preferred embodiment of the invention, and that they are given by way of non-limiting exemplary embodiment. In the drawings, the same or corresponding parts are designated with the same reference numerals.

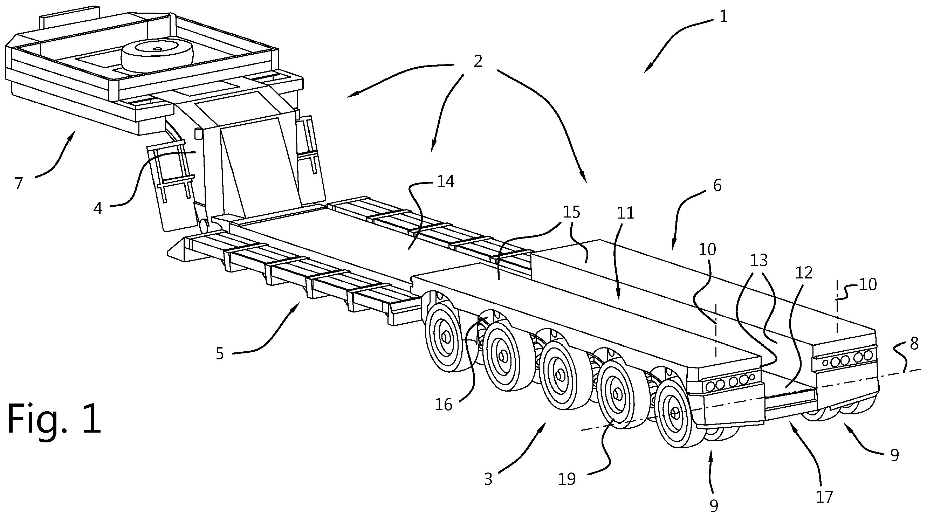

Figs. 1-4 show a trailer 1 implemented as a low-loader. The trailer 1 is of a type that in its basic form is comparable to the trailer of NL 1025755 cited in the introduction to the description. To make simple comparison possible, for this description, alignment with the description of NL 1025755 has been sought as much as possible.

Referring to Fig. 1, the trailer 1 comprises a chassis 2 and an undercarriage 3. In the example shown, the trailer 1 is embodied as a low-loader. The chassis 2 here comprises, as seen from front to rear, a swan-neck 4, a lowered middle part 5 for bearing a load, and an end part 6, raised once again, from which the undercarriage 3 is suspended. The swan-neck 4 is provided with coupling means 7 for coupling the trailer to a tractive vehicle (not shown here).

The undercarriage 3 here comprises five wheel lines 8, each consisting of two wheel sets 9 on either side of the trailer chassis 2. The wheel sets 9 are steerable about an upright axis 10. Formed in the raised chassis part 6 is a central recess 11 which extends in longitudinal direction between the wheel sets 9 of the five wheel lines 8, up to the rear of the chassis 2. In the example shown, the central recess 11 is formed by a U-shaped profile beam, which is open at the top, and which has a bottom 12 and standing sidewalls 13.

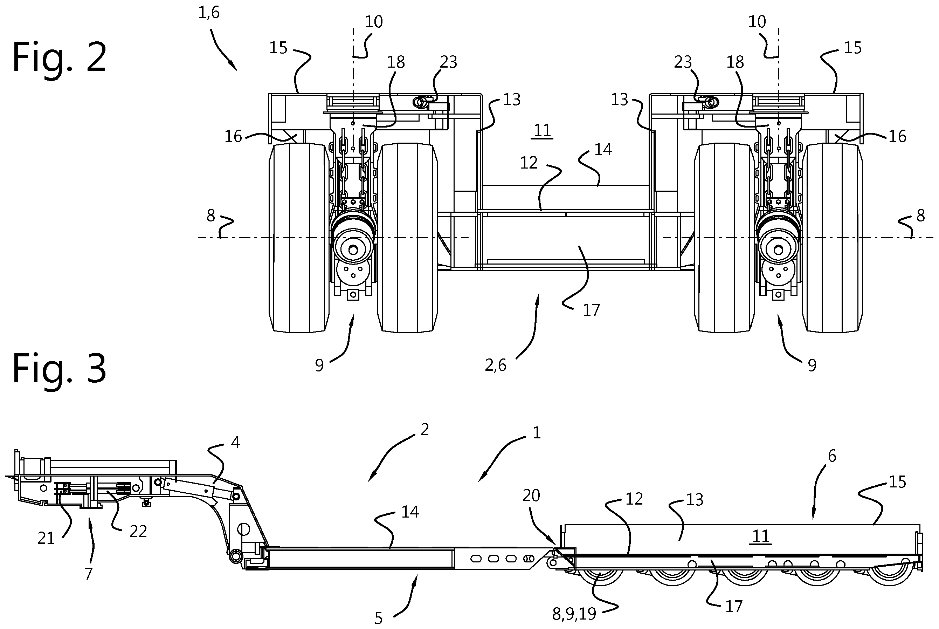

In Fig. 2 it can be properly seen that the sidewalls 13 of the U-shaped profile beam connect at the top to horizontal chassis parts 15, which extend above the wheel sets 9. These horizontal chassis parts 15 are of a bearing configuration, so that it is possible to drive over them during loading of the trailer 1. To that end, the horizontal chassis parts 15 are supported by means of support members 16 on a chassis tubular beam 17, which is under the recess 11 and runs on under the lowered chassis part 5. The support members 16 are then situated in front of and behind each wheel set 9. The top of the chassis tubular beam 17 in this exemplary embodiment forms the bottom 12 of the recess 11.

The recess 11 is suitable, for example, for allowing to rest therein the digging arm or boom of an excavator, not shown, to be transported on the trailer 1, so that the total height of the loaded trailer 1 becomes minimal, and also the center of gravity thereof comes to lie as low as possible.

In accordance with the invention, the recess 11 is clear to a level that is located lower than the level of the top 14 of the load-bearing middle chassis part 5. The recess 11 is then preferably clear throughout the longitudinal and height direction thereof, i.e., in height direction from the open top to the bottom 12 formed by the top of the chassis tubular beam 17, and in longitudinal direction throughout the length of the recess. As can be properly seen in Fig. 3, the bottom 12 of the recess 11 in a running order condition is located lower than the top 14 of the middle part 5 of the chassis, and at the transition between the end part 6 and the middle part 5 is provided with a step 20.

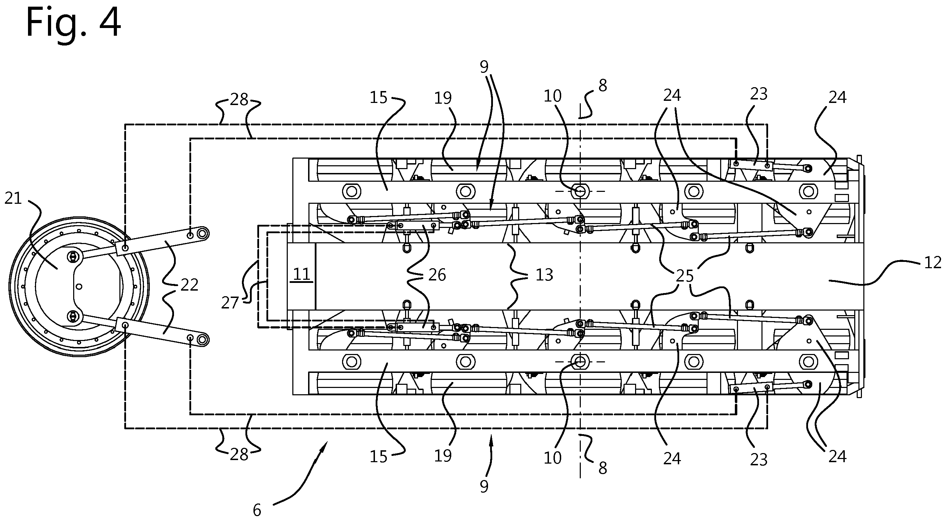

The wheel sets 9 each comprise a central wheel leg which carries two wheels 19, and which is bearing-mounted around an upright axis 10 in the horizontal chassis part 15. The wheel sets 9 are, as stated, steerable. Referring to Fig. 4, to that end, the front part of the trailer is provided, at the position of the coupling 7 to a tractive vehicle, with a turntable. For both sides of the trailer, the turntable 21 is mechanically coupled with a master steering cylinder 22. The master steering cylinders 22 are double-acting and are each hydraulically connected via double lines 28 to a double-acting slave steering cylinder 23. The slave steering cylinders 23 in this example are each mechanically coupled to a steerable wheel set of the fifth wheel line, and are operative between a steering flange 24 of the wheel set 9 and the horizontal chassis part 15.

The wheel sets 9 are, per side of the trailer, mechanically connected with each other by means of coupling rods 25 extending substantially in longitudinal direction of the chassis 2 on either side of the recess 11. Pivoting of the trailer 1 relative to the tractive vehicle around the coupling 7 causes the turntable 21 to rotate, as a result of which the master steering cylinders 22 for the wheel sets 9 on the opposite sides of the trailer slide in and out, respectively. The slave steering cylinders 23 then slide out and in, respectively, as a result of which they impose a steering movement on the rear wheel sets 9 via the steering flanges. The steering movement is passed on to the more forward wheel sets via the coupling rods 25.

In order to ensure that all wheel sets 9 perform an imposed steering movement, also if, for example, one of the master or slave steering cylinders were to fail, the wheel sets 9 on either side of the recess 11 of the trailer 1 are hydraulically coupled to each other. The opposite steerable wheel sets 9 of the second wheel line on either side of the trailer 1, in this exemplary embodiment, are each mechanically coupled with a double-acting hydraulic coupling cylinder 26, which is operative between a steering flange 24 and the horizontal chassis part 15. The hydraulic coupling cylinders 26 are hydraulically connected with each other via double hydraulic lines 27. The lines 27 run around the recess 11 at the front of the rear chassis part 6, so that the recess can remain clear throughout its length and depth. In another variant, the lines may be guided along the rear side around the recess, or be guided to pass under the recess through the chassis tubular beam 17.

Thus, there is provided a trailer, comprising a chassis and an undercarriage, which comprises one or more wheel lines. Each wheel line comprises at least two wheel sets placed on either side of the trailer and steerable about an upright axis, and the chassis comprises at the position of the undercarriage a central recess extending in longitudinal direction and open at the top. The recess extends both in longitudinal and in height direction at least partially between the mutually opposite wheel sets of one or more of the wheel lines. The chassis comprises a lowered middle part for bearing a load, as well as an end part raised relative thereto, from which the undercarriage is suspended, and in which the recess is situated. The steerable wheel sets on either side of the trailer are hydraulically connected with each other while leaving the recess clear, and the recess is clear to a level that is lower than the load-bearing middle chassis part.

The invention is not limited to the exemplary embodiment discussed here. Many implementation variants are possible. Thus, the central chassis part may be implemented with a double girder instead of with a central main girder. Also, between the swan-neck and the lowered chassis part, another chassis part may be arranged with further wheel lines. Also, the raised end part of the chassis may be implemented with fewer wheel sets, and a number of the wheel sets may be freely rotatable (i.e., not steered). Such variants will be clear to one skilled in the art, and are within the scope of the invention as set forth in the following claims.

### List of reference numerals

- 1.: Trailer
- 2.: Chassis
- 3.: Undercarriage
- 4.: Swan-neck
- 5.: Lowered middle part / middle part chassis
- 6.: Raised end part / rear part chassis
- 7.: Coupling means
- 8.: Wheel line
- 9.: Wheel set
- 10.: Upright axis
- 11.: Central recess
- 12.: Bottom / top of chassis tubular beam
- 13.: Sidewall
- 14.: Top of middle chassis part
- 15.: Horizontal chassis part
- 16.: Support member
- 17.: Chassis tubular beam
- 18.: Central wheel leg
- 19.: Wheel
- 20.: Step
- 21.: Turntable
- 22.: Master steering cylinder
- 23.: Slave steering cylinder
- 24.: Steering flange
- 25.: Coupling rod
- 26.: Hydraulic coupling cylinder
- 27.: Hydraulic line
- 28.: Hydraulic line

## Claims

1. A trailer, comprising a chassis and an undercarriage, which comprises one or more wheel lines, wherein each wheel line comprises at least two wheel sets placed on either side of the trailer, steerable around an upright axis, and wherein the chassis at the position of the undercarriage comprises a central recess running in longitudinal direction and open at the top, which extends both in longitudinal and in height direction at least partially between the mutually opposite wheel sets of one or more of the wheel lines, wherein the chassis comprises a lowered middle part for bearing a load, as well as an end part raised relative thereto, from which the undercarriage is suspended and in which the recess is situated, **characterized in that** the steerable wheel sets on either side of the trailer are hydraulically connected with each other while leaving the recess clear, and that the recess is clear to a level that is located lower than the lowered middle part for bearing the load.

2. The trailer according to claim 1, wherein the steerable wheel sets on either side of the trailer are each mechanically coupled with a hydraulic coupling cylinder, and wherein the hydraulic coupling cylinders are hydraulically connected with each other via lines.

3. The trailer according to claim 1 or 2, wherein the front part of the trailer is provided with a coupling, provided with a turntable, for coupling with a tractive vehicle, and wherein the turntable for both sides of the trailer is mechanically coupled with a master steering cylinder, which via lines is hydraulically connected with a slave steering cylinder which is mechanically coupled with a steerable wheel set on the respective side.

4. The trailer according to any one of the preceding claims, wherein the wheel sets per side of the trailer are mechanically connected with each other by means of coupling rods extending substantially in longitudinal direction of the chassis on either side of the recess.

5. The trailer according to any one of the preceding claims, wherein the central recess is defined by a U-shaped profile beam, having a bottom and standing sidewalls, which extends between the mutually opposite wheel sets.

6. The trailer according to any one of the preceding claims, wherein under the recess a chassis tubular beam is arranged, which extends up to the middle part of the chassis.

7. The trailer according to claim 6, wherein the sidewalls are connected with bearing chassis parts extending above the wheel sets, and between the chassis tubular beam and these bearing chassis parts, support members are arranged.

8. The trailer according to claim 7, wherein each steerable wheel set is suspended from a rotating element, which is pivotally bearing-mounted in the chassis part extending above the wheel set.
